# EUROPEAN PATENT SPECIFICATION

(11) **EP 4 391 212 B1**
(45) Date of publication and mention of the grant of the patent: **30.09.2026**
(21) Application number: 23850361.9
(22) Date of filing: 28.07.2023
(51) Int. Cl.: H01M 50/593, H01M 50/209, H01M 50/375, H01M 50/276, H01M 50/242, H01M 10/658, H01M 50/211, H01M 50/119, H01M 50/178, H01M 50/105, H01M 50/367, H01M 50/358, H01M 50/342, H01M 50/249, H01M 10/613, H01M 10/647, H01M 10/653, H01M 10/6553, H01M 10/6557, H01M 50/502

(54) **BATTERY PACK**
BATTERIEPACK
BLOC-BATTERIE

(30) Priority: 05.08.2022 KR 20220097741
(43) Date of publication of application: 26.06.2024
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2023/011083
(87) International publication number: WO 2024/029859

(56) References cited:
- KR-A- 20170 094 759
- KR-A- 20190 051 157
- KR-A- 20220 042 840
- KR-A- 20220 105 948
- KR-A- 20220 109 220
- US-A1- 2022 013 839
- US-A1- 2022 085 452

## Description

### TECHNICAL FIELD

The present disclosure relates to a battery pack, and more particularly, to a battery pack with improved energy density of battery cells and enhanced safety against thermal events.

### BACKGROUND ART

With a rapid increase in demand for portable electronic products that work on electricity such as laptop computers, video cameras, mobile phones and so on and the widespread use of mobile robots, electric bikes, electric carts, electric vehicles and so on, many studies are being made on high performance secondary batteries that can be recharged repeatedly.

Commercially available secondary batteries include nickel-cadmium batteries, nickel-hydrogen batteries, nickel-zinc batteries, lithium secondary batteries and so on, and among them, lithium secondary batteries have little or no memory effect, and thus they are gaining more attention than nickel-based secondary batteries for their advantages that recharging can be done whenever it is convenient, the self-discharge rate is very low, the energy density is high and the operating voltage is high. Lithium secondary batteries have been studied more intensively and used in a wider range of applications than the other types of secondary batteries.

Recently, secondary batteries are being used in not only small devices such as portable electronic devices but also medium and large devices such as electric vehicles or Energy Storage Systems (ESS).

In general, a battery pack basically includes a plurality of battery modules and a pack case accommodating the battery modules. In this case, each battery module includes a plurality of secondary batteries electrically connected to each other and a module case accommodating the secondary batteries.

A pouch type battery has advantages of light weight and small dead spaces due to a plurality of pouch type batteries stacked or arranged, but is relatively vulnerable to external impacts and low efficient in assembling due to its characteristics such as shape and material. As described above, a battery pack is manufactured by receiving a plurality of pouch type battery cells in a module case to form a battery module and receiving a plurality of battery modules in a pack case.

In this view, a partial space of the battery pack is used as a space for the plurality of battery modules, resulting in a smaller number of battery cells received and lower energy density, and to receive the same number of battery cells, the battery pack will have a larger size.

Since the battery module includes a variety of physical or electrical configurations such as a module case, a frame for stacking, an electrical connection structure and so on, it requires a never-too-small space and an additional space for assembling the components or ensuring the design tolerance, causing a significant space loss from the viewpoint of energy density.

Further, the battery pack requires the modularization of the plurality of battery cells before manufacturing or assembling the battery pack, resulting in a complex and prolonged process, and since the battery cells that generate heat are double cased, it is difficult to transfer the heat from inside of the battery cells to outside, resulting in low cooling or heat dissipation efficiency.

Meanwhile, secondary batteries are extending their range of applications, but due to their behavior characteristics, thermal runaway may occur in secondary batteries due to swelling, rush current, overheating caused by joule heating or decomposition reaction of electrolyte solutions.

Additionally, when events occur such as shorts between secondary batteries or excessive temperature rises, a large amount of venting gases may be produced, and in worse cases, flames and high temperature particles including electrode active materials and aluminum particles may leak together, so ensuring safety of the battery pack is more important.

Since a large number of secondary batteries (battery cells) are densely packed in the limited space of the battery pack, the battery pack may be more susceptible to thermal events. In particular, in the event of thermal runaway in the battery cell, if high temperature gases, flames and heat produced are not controlled quickly, fire spread or explosion from the corresponding battery cell (cell assembly) to the adjacent battery cell (cell assembly) may occur due to thermal propagation.

Since medium and large battery packs used in the means of transport such as electric vehicles on which users ride include a large number of battery cells densely packed to increase the output and capacity, large fires may occur, causing damage to human life, and accordingly it is necessary to suppress and control thermal events more strongly at the early stage when the thermal events occur in the battery cells.

### SUMMARY

### Technical Problem

The present disclosure is designed to solve the above-described problem in the above-described background, and therefore the present disclosure is directed to providing a battery pack in which battery cells are directly received to improve process efficiency and effectively suppress the spread of venting gas.

The technical problem to be solved by the present disclosure is not limited to the above-described problems, and these and other problems will be clearly understood by those skilled in the art from the following description.

### Technical Solution

To achieve the above-described objective, the invention provides a battery pack according to claim 1.

The battery pack after the invention may present one or more feature(s) of dependent claims 2 to 8, in any combination allowed by the claims.

The invention also provides a vehicle according to claim 9.

### Advantageous Effects

According to the present disclosure, since the plurality of battery cells is directly received in the pack case (the pack housing) without any frame for stacking or module case, it may be possible to increase process efficiency and improve energy density more effectively.

In particular, according to an aspect of the present disclosure, since the case having a minimal structure in a hexahedral shape is applied to every one or more battery cells, it may be possible to perform the process of stacking or arranging the plurality of battery cells standing upright side by side in the pack case more easily.

Additionally, according to an aspect of the present disclosure, since the cell case is made of a material having high durability against thermal events such as stainless steel (SUS), it may be possible to suppress or delay thermal propagation from a certain battery cell (cell assembly) to other battery cell (cell assembly).

According to another aspect of the present disclosure, since the insulation block that insulates the electrode portion of the battery cell from the cell case is used as a medium for forming a closed path along which venting gas is vented, it may be possible to effectively suppress the spread of venting gas to adjacent other battery cell (cell assembly).

In particular, due to being designed to guide the insulation block to naturally enter the entry hole of the venting frame (having the venting channel inside) by the pressure of venting gas produced in the battery cell or cell assembly, it may be possible to effectively vent the vent gas produced in the corresponding battery cell or cell assembly through the venting frame installed in the pack housing (the pack case) without artificial manipulation or an addition of a complex structure.

Additionally, according to the present disclosure, it may be possible to avoid the direct contact between the worker or the jig and the battery cell in the process of receiving the battery cell or the cell assembly in the pack housing, thereby effectively preventing damage or deterioration such as cracks in the battery cell, and since the process is performed for each cell case having the optimum volume, it may be possible to increase process efficiency.

The present disclosure may have many other effects, and its description will be provided in each exemplary configuration, or regarding effects that can be easily inferred by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a perspective view showing the layout of a battery pack according to an embodiment of the present disclosure.
FIG. 2 is a diagram showing a cell case accommodating a cell assembly.
FIG. 3 is a perspective view showing the layout of the cell case shown in FIG. 2.
FIG. 4 is an exploded perspective view of a cell case according to an embodiment of the present disclosure.
FIG. 5 is a diagram illustrating an insulation block according to an embodiment of the present disclosure, coupled to an electrode portion of a cell assembly.
FIG. 6 is a diagram showing a structure of a venting frame according to an embodiment of the present disclosure.
FIGS. 7 and 8 are diagrams showing a relationship between a venting frame and a cell case.
FIG. 9 is an enlarged view of section A in FIG. 7.
FIG. 10 is a diagram showing a working relationship of an insulation block shown in FIG. 9 moving to an entry hole of a venting frame.
FIGS. 11 and 12 are diagrams showing an insulation block according to another embodiment of the present disclosure.
FIG. 13 is a diagram showing an external structure of a cell case according to another embodiment of the present disclosure.
FIG. 14 is a diagram showing a pack housing equipped with a heatsink according to an embodiment of the present disclosure.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time that the application was filed.

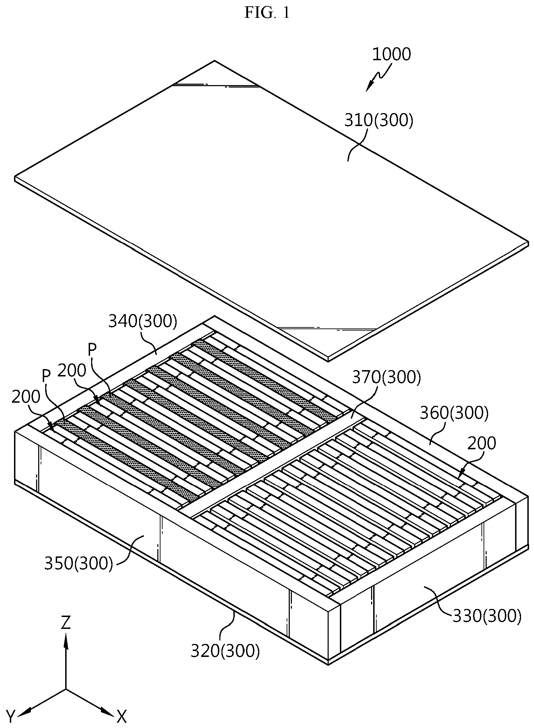

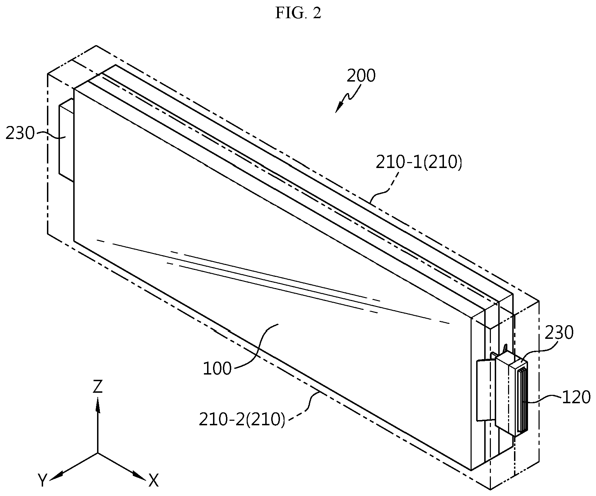

FIG. 1 is a perspective view showing the layout of a battery pack 1000 according to an embodiment of the present disclosure, and FIG. 2 is a diagram showing a cell case 200 accommodating a cell assembly 100.

The battery pack 1000 of the present disclosure includes a plurality of battery cells 110 directly installed in a pack housing 300 without an intermediate configuration such as a battery module in which the battery cells are received.

As shown in the drawings, the battery pack 1000 according to an embodiment of the present disclosure may include the pack housing 300 that acts as a case, a cell assembly 100 including n battery cells 110 and the cell case 200 accommodating the cell assembly 100.

One or more battery cells 110 received in the cell case 200 may be grouped, and n is a natural number of 1 or greater. When the plurality of battery cells 110 is grouped, the electrodes of the battery cells 110 may be connected with the same polarity by known method and means to form a common electrode portion.

The pack housing 300 according to an embodiment of the present disclosure provides an internal space in which at least one cell case 200 is received. Specifically, the pack housing 300 may include a top frame 310, a bottom frame 320 and side frames 330~360.

The top frame 310, the bottom frame 320 or the side frames 330~360 may be in the shape of a plate, but may be in the shape of a polyhedron (for example, a rectangular prism) having a predetermined thickness or more.

The top frame 310 may be disposed on top of the pack housing 300, the bottom frame 320 may be disposed on bottom of the top frame 310 spaced a predetermined distance apart from the top frame 310, and the side frames 330~360 may be disposed between the top frame 310 and the bottom frame 320 with upper and lower ends connected to the top frame 310 and the bottom frame 320, respectively.

At least some of the top frame 310, the bottom frame 320 and the side frames 330~360 may be integrally formed with one another. For example, among the side frames 330~360, the right frame 360 and the left frame 350 may be integrally formed with the bottom frame 320. In this case, the left frame 350, the right frame 360 and the bottom frame 320 integrally formed with one another may be referred to as a U-frame due to the shape.

In this case, the front frame 330 and the rear frame 340 are end flames and may be coupled to the open portions at the front end and the rear end of the U-frame, respectively, and the top frame 310 may be coupled to the open top of the U-frame. The coupling between adjacent frames may be made by flange bolting as well as laser welding or ultrasonic welding.

The inner surface of at least one of the top frame 310, the bottom frame 320 or the side frames 330~360 may be made of a clad metal, or a flame retardant material such as Glass Fiber Reinforced Polymer (GFRP) may be attached to the inner surface.

At least one of the frames 310~360 of the pack housing 300 may be made of a metal having high strength such as stainless Steel (SUS) to effectively achieve physical protection for the internal components, or plastics having high resistance to heat, temperature and shocks such as acrylonitrile-butadiene-styrene (ABS) copolymer or other types of plastics, and according to embodiments, may be made of different types of materials for each part.

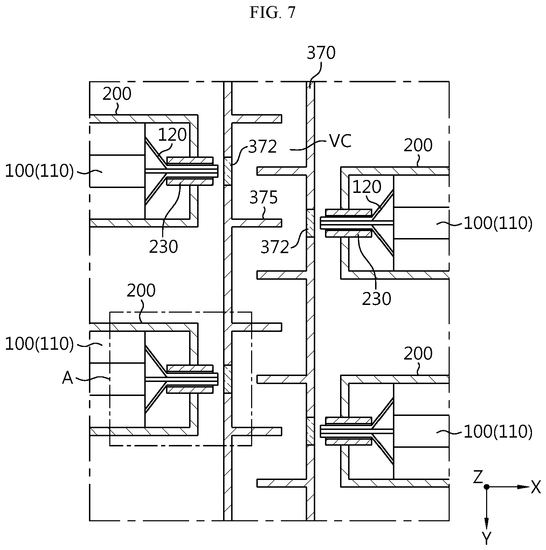

Each frame may act as a venting unit or a venting frame having a venting channel VC (see FIG. 7, etc.) to allow venting gases or flames to flow. In this case, a vent path of venting gas is preferably extended to lower the temperature of venting gas during venting.

Additionally, in the event of flames together with venting gases, more preferably, the venting channel may have a guider or a venting rib 375 (see FIG. 7, etc.) having a bent shape to collapse high linearity that is the behavior characteristics of the flames, resulting in weaker flames.

In particular, as shown in FIG. 1, when the cell case 200 or the cell assembly 100 has a 2×1 matrix group as a whole, a venting frame 370 is preferably installed between a first group and a second group. The venting frame 370 will be described in detail below.

Additionally, although not explicitly shown in the drawings, at least one of each frame 310~360 may have at least one venting hole that acts as a sort of outlet for the venting of venting gas produced from the cell assembly 100 through the venting frame 370.

According to embodiments, a thermal barrier member P standing upright in the vertical direction (based on Z axis) may be interposed between the cell cases 200. The thermal barrier member P may be made of ceramics such as mica or silicone, and perform a function to prevent or reduce the spread of heat, gases and flames over the cell assemblies 100 or the cell cases 200 or delay the propagation time.

Although the drawings show the pack housing 300 accommodating the cell case 200 (including the cell assembly 100 inside) having the 2×1 matrix group on the basis of longitude (X axis) and latitude (Y axis), the pack housing 300 may accommodate the cell assembly 100 having a variety of array combinations such as 1×1, 2×4, 3×2 matrix groups according to spatial characteristics of devices applied, electrical capacity, magnitude of power and the like.

Additionally, FIG. 1 shows an embodiment in which the thermal barrier member P is present between the cell cases 200 in the rear part of the pack housing 300 (based on X axis), and is not present in the front part of the pack housing 300 to increase energy density, i.e., the number of cell assemblies 100 installed per unit area, but this is provided to symbolically illustrate various embodiments, and the present disclosure may be embodied in any other forms.

The battery cell 110 refers to a secondary battery including an electrode assembly, an electrolyte and a battery case, and in the drawings, a pouch type secondary battery that has high energy density and is easy to stack is shown as an example of the battery cell 110.

As shown in FIG. 2, the cell assembly 100 including n battery cells 110 is received in the cell case 200 of the present disclosure with the short axis standing upright in the vertical direction (Z axis in the drawings).

The cell case 200 includes a cover 210 that acts as an outer packaging of the cell case 200. The cover 210 may have various embodiments including a double configuration on the left and right sides like a first cover 210-1 and a second cover 210-2 shown in FIG. 2 which are assembled and coupled to each other after the cell assembly 100 is received inside.

The cover 210 is preferably made of a material having structural stiffness to physically protect the cell assembly 100 received inside, and preferably has a polyhedron shape with the flat bottom to increase assembly efficiency when installed on the bottom surface of the pack housing 300.

Additionally, the cover 210 is preferably made of SUS having high heat resistance performance to effectively prevent or suppress the spread or propagation of a thermal event in the cell assembly 100 including one or more battery cells 110 to the adjacent cell assembly 100.

When the cover 210 of the cell case 200 is made of SUS, since the melting point is higher than aluminum primarily used in metal cases, it may be possible to stably maintain the structural shape and delay or suppress thermal propagation to the adjacent other cell case 200 in the event of flames.

Additionally, since SUS has high mechanical strength or stiffness, it may be possible to support the stack of the pouch type battery cells 110 more stably, and effectively suppress the transfer of external impacts to the battery cells 110 received inside, thereby effectively preventing damage or deterioration of the battery cells 110.

Although not shown in the drawings, a Thermal Interface Material (TIM) may be interposed between the cell assembly 100 and the cell case 200 and between the cell case 200 and the pack housing 300 to increase cooling efficiency.

Meanwhile, the inner surface of the cover 210 accommodating the battery cell 110 or the cell assembly 100 may have an insulation member or an insulation sheet made of a non-conductive material, and according to embodiments, the insulation member may have an adhesive layer on one surface to attach the insulation member to the inner surface of the cover 210.

According to the above-described exemplary configuration, it may be possible to prevent shorts caused by cracks in the pouch case and enhance the coupling strength between the first cover 210-1 and the second cover 210-2 of the cover 210 coupled to each other.

As shown in the drawings, the cell case 200 of the present disclosure includes an open portion 220 formed in the cover 210 through which an electrode portion 120 of the cell assembly 100 is exposed and an insulation block 230 disposed in the open portion 220 to insulate the electrode portion 120 of the cell assembly 100 from the cover 210. The function and working relationship of the insulation block 230 will be described in detail below.

Additionally, although not shown in the drawings, the exposed electrode portion 120 of the cell assembly 100 may be electrically connected by a busbar made of a metal having electrically conductive properties. In this case, the busbar preferably has a bent shape or structure in the upward or downward direction one or more times to minimize interferences caused by a relationship with the insulation block 230 or physical movements of the insulation block 230, and the insulation block 230 may include a slit portion or a cutout portion in at least one of the upper side or the lower side adaptively conforming to the shape of the busbar.

The axis shown in the drawing, the terms indicating the axis and the terms representing the direction such as upper, lower, front, rear and vertical described based on the corresponding axis are used to present a relative standard for describing the embodiment of the present disclosure, and not intended to define a direction or location on the absolute basis, and it is obvious that the terms may change depending on the position of the stated object or an observer, the viewing direction and the like.

Hereinafter, as described above, the embodiment of the present disclosure will be described based on Z axis defined as a reference of up-down direction or vertical direction, and from the corresponding viewpoint, X axis defined as a reference of the front or rear, and Y axis defined as a reference of the left or right. According to the definition, the XY plane is a horizontal plane in the embodiment of the present disclosure, and the X axis direction is a lengthwise direction of the battery cell 110 and the cell assembly 100 (based on the long axis).

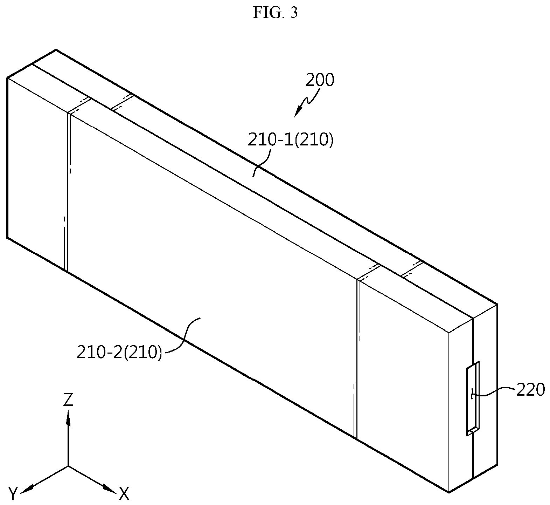

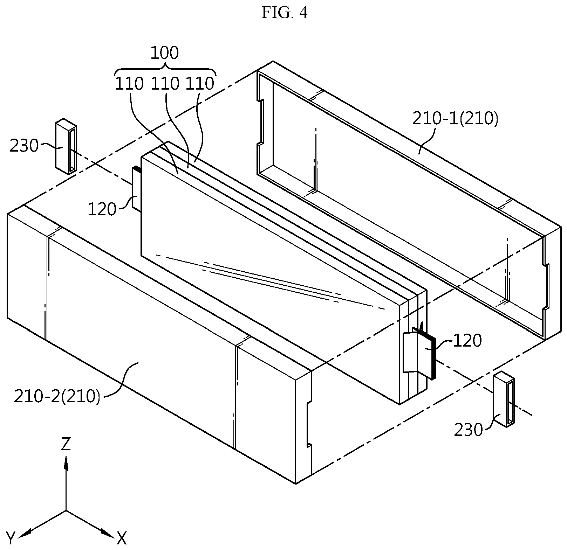

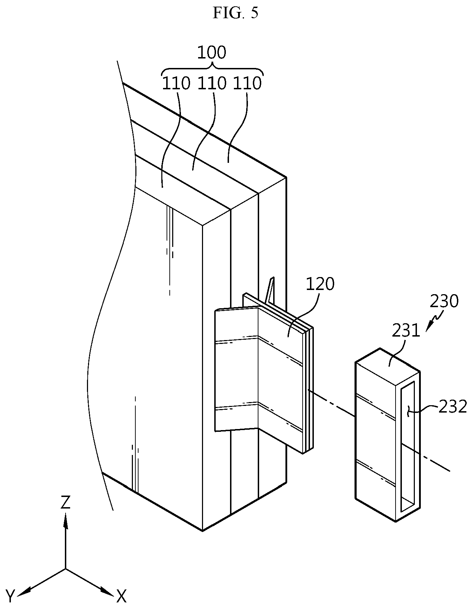

FIG. 3 is a perspective view showing the layout of the cell case 200 shown in FIG. 2, FIG. 4 is an exploded perspective view of the cell case 200 according to an embodiment of the present disclosure, and FIG. 5 is a diagram illustrating the insulation block 230 according to an embodiment of the present disclosure, coupled to the electrode portion 120 of the cell assembly 100.

As briefly described above, the cell case 200 according to an embodiment of the present disclosure may include the cover 210, the open portion 220 on at least one of the front side or the rear side of the cover 210 and the insulation block 230 disposed in the open portion.

When the cover 210 is a single complete piece, the open portion 220 may be formed in a penetrating way, and according to embodiments, when the cover 210 includes the first cover 210-1 and the second cover 210-2 coupled to each other, each of the first cover 210-1 and the second cover 210-2 may have a space at the front side and the rear side, and the open portion 220 may be formed as a whole by the coupling of the first cover 210-1 and the second cover 210-2 each having the space at the front side and the rear side.

The open portion 220 of the cover 210 is preferably disposed at a location corresponding to the electrode of the cell assembly 100 received inside. Although the drawings show the open portion 220 in the central part of the front and rear plane (YZ plane) of the cover 210, according to embodiments, when the electrode of the cell assembly 100 runs downward or upward (based on Z axis), the open portion 220 may run upward or downward from the central part to match the location.

The open portion 220 provides a space for the exposure of the electrode portion 120 of the cell assembly 100 received in the cell case 200. The cover 210 that acts as an outer packaging of the cell case 200 is preferably made of a metal such as SUS to ensure structural strength and heat resistance, and in this case, when the exposed electrode portion 120 of the cell assembly 100 through the open portion 220 physically contacts the cover 210, an electrical short may occur.

To solve the safety problem, the insulation block 230 is preferably disposed in the open portion 220 to insulate the electrode portion 120 from the cover 210.

Specifically, the insulation block 230 according to an embodiment of the present disclosure may include a body portion 231 and a slot portion 232 formed in the body portion 231 and configured to provide the space through which the electrode portion 120 of the cell assembly 100 passes.

The shape of the slot portion 232 may conform to the electrode portion 120, but physically fixing the electrode portion 120 is not the essential function of the slot portion 232, so the width or size of the slot portion 232 may be larger than that of the electrode portion 120, and according to embodiments, unlike the illustrated example, a part of the slot portion 232 may be open.

As described below, according to the exemplary configuration of the present disclosure, when venting gas is produced from the battery cell 110 or the cell assembly 100 received in the cell case 200, the slot portion 232 is configured to allow the venting gas to be vented through the slot portion 232, so in this view, the slot portion 232 is preferably larger in size than the electrode portion 120.

Although the drawings show that the cross section of the slot portion 232 has a rectangular shape having a longer vertical length to conform to the electrode portion 120, the cross section of the slot portion 232 preferably has an oval or elliptical shape or a polygonal shape such as a triangular, trapezoidal and hexagonal shapes so that a portion physically supports the electrode portion 120 and another portion has an extra space for effective venting of venting gas as described above.

The insulation block 230 that exposes the electrode portion 120 of the cell assembly 100 is disposed in the open portion 220 of the cell case 200 and its location is maintained. A variety of methods may be used to maintain the location of the insulation block 230 at the open portion 220, for example, joining, welding, adhesion, physical coupling and the like.

The insulation block 230 according to an embodiment of the present disclosure performs the basic function of an insulator or an insulation member, and as described above, when venting gas is produced from the cell assembly 100 received in the cell case 200, the insulation block 230 acts as a through hole for the venting of the venting gas through a margin space between the electrode portion 120 and the slot portion 232.

According to an embodiment of the present disclosure, since the insulation block 230 is disposed on the front side or/and the rear side of the cell case 200, it may be possible to guide the venting direction to prevent venting gas from being directed toward the adjacent cell cases 200 arranged or stacked in the lateral direction (based on Y axis). As described above, when the venting direction is guided to the specific direction, it may be possible to control the venting direction and achieve organized combinations with the venting channel more effectively.

Further, when the internal pressure increases due to the produced venting gas, to increase venting efficiency accordingly, the insulation block 230 is preferably configured to move outward from the open portion 220 due to the internal pressure caused by the venting gas to extend the venting space of the venting gas.

To this end, the insulation block 230 of the present disclosure is preferably configured such that its location is maintained at the open portion 220 but not constantly fixed to the open portion 220. Preferably, the insulation block 230 is disposed at the open portion 220 by a proper fixing strength designed through a functional relation with the internal pressure caused by venting gas.

Examples of the method may include interference-fit physical coupling using a size correlation of the insulation block 230 and the open portion 220, taping that is broken or becomes weaker when a threshold is exceeded, adhesive coating having lower adhesive strength than an external force that is larger than a designed reference value, and adhesive coating area adjustment. Additionally, since venting gas also has high temperature characteristics, another method is to place an additional member may be placed for physical coupling between the open portion 220 and the insulation block 230 and melt the member at the temperature that is equal to or higher than the threshold.

Hereinafter, the structure of the venting frame 370 having the venting channel VC and a working relationship of the venting frame 370 and the insulation block 230 coupled to the venting frame 370 in an organized manner will be described in detail.

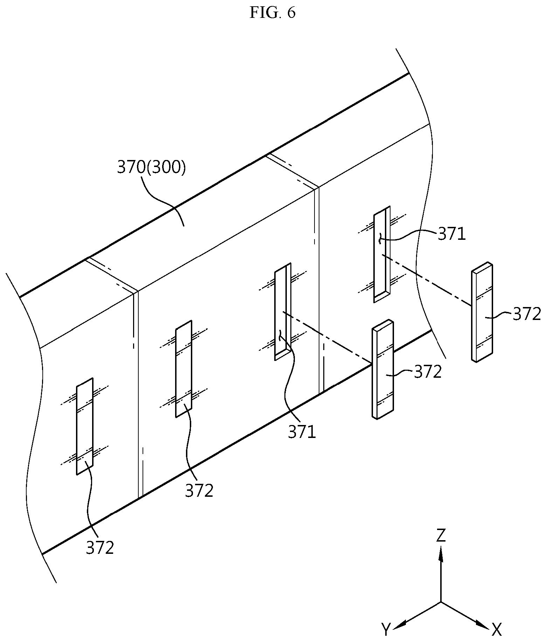

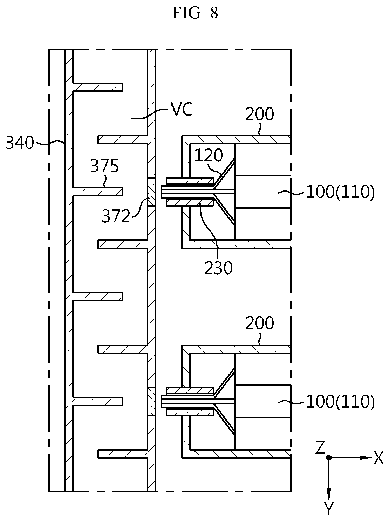

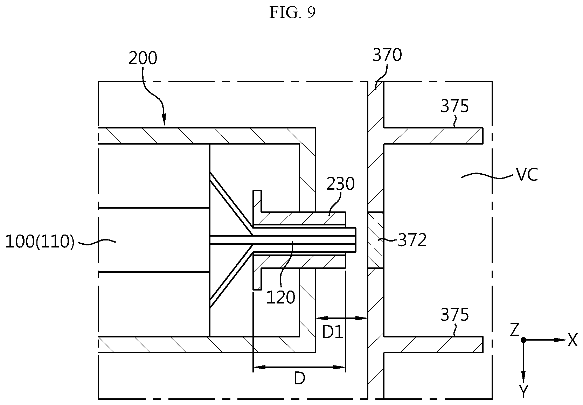

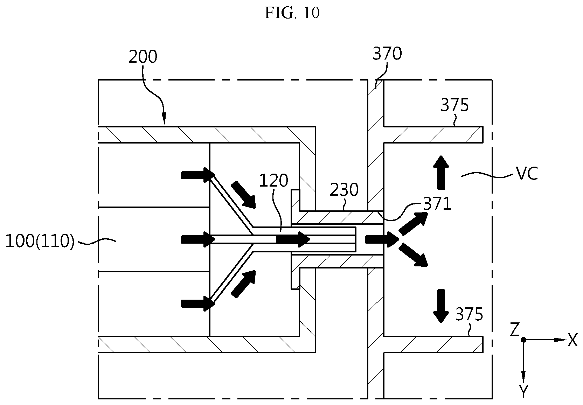

FIG. 6 is a diagram showing the structure of the venting frame 370 according to an embodiment of the present disclosure, FIGS. 7 and 8 are diagrams showing a relationship between the venting frame 370 and the cell case 200, FIG. 9 is an enlarged view of section A in FIG. 7, and FIG. 10 is a diagram showing a working relationship of the insulation block 230 shown in FIG. 9 moving to an entry hole 371 of the venting frame 370.

As described above with reference to FIG. 1, when the cell assembly 100 has the 2×1 matrix group as a whole, the venting frame 370 may be installed between the first group and the second group. In this instance, the venting frame 370 is not a specific frame installed at a preset location, and at least one of the side frames 330~360 may be the venting frame 370 so long as it performs the venting function of venting gas flowing from the inside of the cell case 200 to the outside.

In relation to this, FIG. 7 is a diagram exemplarily showing the venting frame 370 installed in the central part of the pack housing 300, and FIG. 8 is a diagram showing the structure of the rear frame 340, one of the side frames 330~360, acting as the venting frame.

As shown in FIGS. 6, etc., the venting frame 370 includes at least one entry hole 371 at a location corresponding to the insulation block 230 of the cell case 200, and has the venting channel VC inside.

The venting channel VC may be formed in a zigzag or maze path to extend the vent path of venting gas so as to lower the temperature of venting gas during venting. Additionally, in the event of flames together with venting gas, more preferably, the venting channel may have the guider or venting rib 375 having the bent shape to collapse high linearity that is the behavior characteristics of the flames, resulting in weaker flames.

As described above, when the internal pressure of venting gas (thermal event) produced from the specific cell assembly 100 exceeds the proper level, the insulation block 230 moves outward by the internal pressure (see FIG. 10).

As shown in the drawings, since the entry hole 371 of the venting frame 370 is located outside of the insulation block 230, one end of the insulation block 230 naturally enters the entry hole 371 without any artificial manipulation or complicated mechanism.

When the end of the insulation block 230 enters the entry hole 371, as indicated by the arrow in FIG. 10, the closed vent path is formed along the cell assembly 100 (or the battery cell 110) in which venting gas occurred → the insulation block 230 → the entry hole 371 of the venting frame 370 → the venting channel VC in the venting frame 370 → the outlet (not shown).

That is, since venting gas produced from the specific cell assembly 100 is vented via the path in direct communication with the venting frame 370 through the insulation block 230 of the corresponding cell case 200, it may be possible to strongly suppress the influence of the produced venting gas on the adjacent other cell assembly 100.

The horizontal (X axis direction) length D (see FIG. 9) of the insulation block 230 (specifically, the body portion 231 of the insulation block 230) is preferably longer than a first distance D1 (see FIG. 9) between the venting frame 370 and the cell case 200.

According to the above-described exemplary configuration of the present disclosure, when one end of the insulation block 230 (specifically, the body portion 231 of the insulation block 230) is inserted into the entry hole 371 by the internal pressure caused by the venting gas, it may be possible to prevent the other end of the insulation block 230 from slipping out of the open portion 220, thereby forming the closed vent path more effectively.

Meanwhile, a blocking member 372 is preferably disposed in the entry hole 371 to block or close the entry hole 371 so long as there is no action of a physical pushing force to prevent the backflow or venting of venting gas entering the venting channel VC to other cell assembly 100 through other entry hole 371.

In other words, the blocking member 372 is configured to physically block the entry hole 371 in normal situations, and move away from the entry hole 371 in part or in whole with the movement of the insulation block to open the entry hole 371.

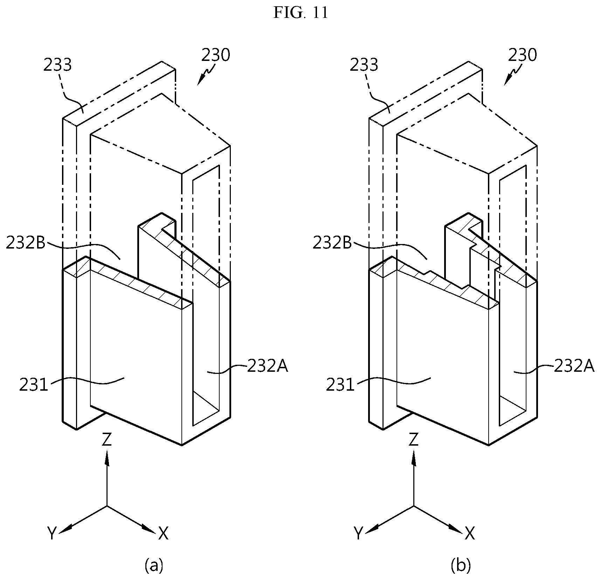

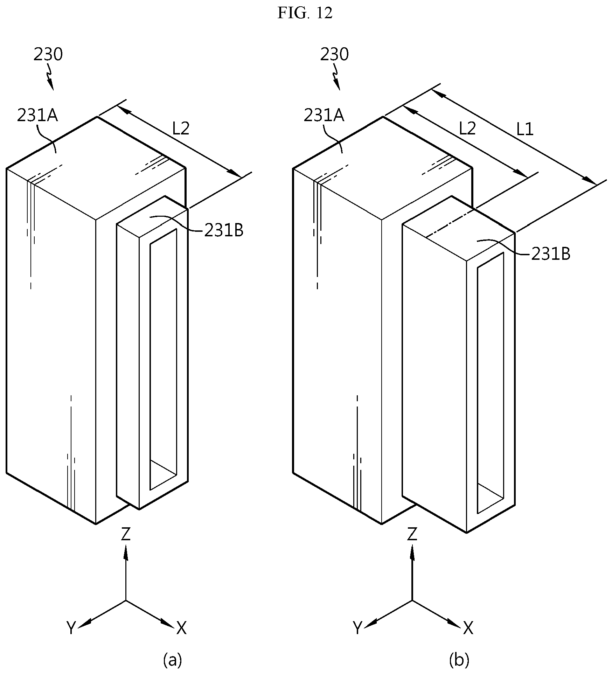

FIGS. 11 and 12 are diagrams showing the insulation block 230 according to another embodiment of the present disclosure. As shown in FIGS. 11(a) and 11(b), the slot portion 232 formed in the body portion 231 of the insulation block 230 is preferably configured such that an outer space 232A facing the entry hole 371 of the venting frame 370 is smaller than an inner space 232B opposite the outer space 232A.

According to the above-described exemplary configuration of the present disclosure, when the insulation block 230 moves back outwards by the internal pressure (i.e., enters the entry hole 371), it may be possible to ensure the venting space of venting gas more effectively, thereby further increasing venting efficiency, and to increase the area on which the internal pressure acts, leading to the larger driving force for moving the insulation block 230 away from the open portion 220, thereby achieving the physical behavior characteristics of the insulation block 230 moving outward faster.

Additionally, as shown in FIG. 11, the insulation block 230 preferably further includes a stopper structure 233 at the other end (inward direction) of the body portion 231 to prevent the body portion 231 of the insulation block 230 from slipping out of the open portion 220, i.e., to prevent the collapse of the closed vent path when moving outward by the internal pressure caused by the venting gas.

The stopper structure may have various structures and shapes to prevent the other end of the body portion 231 from slipping out of the open portion 220, and as shown in FIG. 11, may be a flange structure having a wider cross area than the body portion 231.

Additionally, the body portion 231 of the insulation block 230 may include a plurality of parts 231A, 231B as shown in FIG. 12, and the length (L2→L1) may be extendable toward the entry hole 371 through a sliding movement structure.

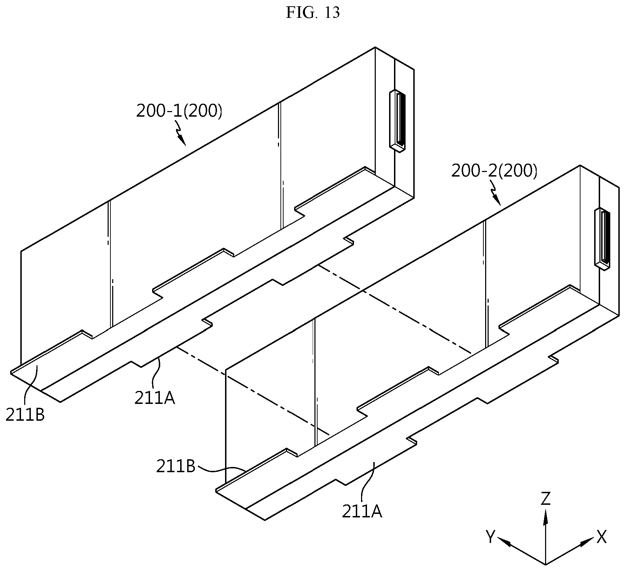

FIG. 13 is a diagram showing the external structure of the cell case 200 according to another embodiment of the present disclosure.

As shown in FIG. 13, the cell case 200 according to an embodiment of the present disclosure may further include a first coupling portion 211A and a second coupling portion 211B. As described above, the cell case 200 may have a hexahedral shape as a whole with a flat bottom surface to effectively guide the installation of the cell case 200 standing upright when it is installed in the pack housing 300.

In this instance, according to embodiments, when the number of battery cells 110 in the cell case 200 is not so much or only one battery cell 110 is received in the cell case 200, since the cell case 200 is elongated as a whole and extends in the lengthwise direction (X axis direction), despite the flat bottom surface, it may not be easy to install the cell case 200 standing upright.

To solve this problem, as shown in the drawings, the cover 210 of the cell case 200 may include the first coupling portion 211A and the second coupling portion 211B extending in the outward direction. As described above, when the cover 210 has the first coupling portion 211A, etc., it may be possible to extend the physically supported area with the bottom surface of the pack housing 300, thereby guiding the cell case 200 to stand upright more easily and effectively.

Further, as shown in the drawings, the first coupling portion 211A on one side of the cover 210 has a first coupling structure of a concave shape, a convex shape or a combination of concave and convex shapes in a repeating pattern, and the second coupling portion 211B on the other side of the cover 210 may have a coupling structure corresponding to the first coupling structure of the first coupling portion 211A, i.e., having a matching relationship.

According to the above-described exemplary configuration of the present disclosure, it may be possible to easily install each of the plurality of cell cases 200-1, 200-2 standing upright and arrange or stack the plurality of adjacent cell cases 200-1, 200-2 accurately in a simple and easy manner, thereby increasing the efficiency of the process of installing the plurality of cell cases 200 in the pack housing 300.

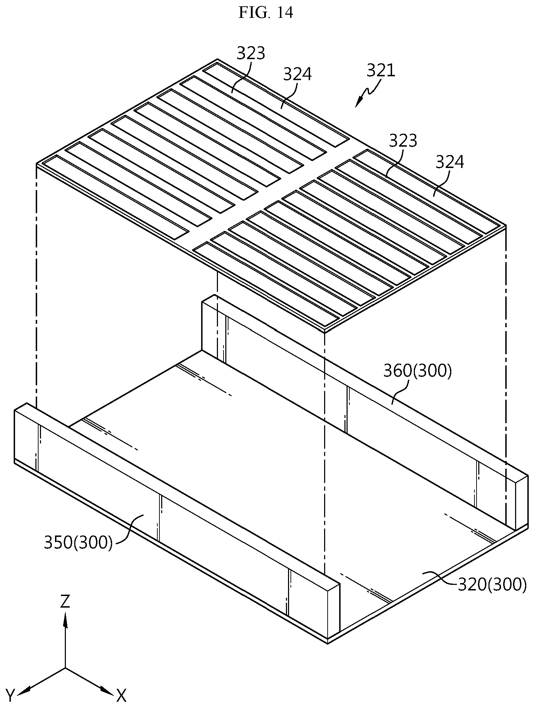

FIG. 14 is a diagram showing the pack housing 300 equipped with a heatsink 321 according to an embodiment of the present disclosure.

As shown in FIG. 14, the heatsink 321 may be installed in the bottom frame 320 among the frames of the pack housing 300 to increase heat dissipation or cooling efficiency. As described above, when the heatsink 321 is installed in the pack housing 300, at least one cell case 200 of the present disclosure may be installed at the heatsink 321 such that the bottom surface contacts the heatsink 321.

The heatsink 321 may have a coating of thermal resin on the surface to further increase heat dissipation efficiency. The thermal resin may be made of a material having high heat transfer characteristics and adhesive properties, to effectively transfer heat produced from the battery cell 110 or the cell assembly 100 to the heatsink 321 and improve the location maintenance of the cell case 200 installed at the heatsink 321.

Additionally, as shown in the drawings, the heatsink 321 may have a groove line 323 corresponding to the width and length of the cell case 200 on the upper surface, and a guiding portion 324 between the groove lines 323.

As described above, when the groove line 323 is present in the heatsink 321, since the cell case 200 may be installed in a way of seating on the groove line 323, it may be possible to guide the assembly location, thereby further increasing installation efficiency, and since the bottom of the cell case 200 is physically supported through the space of the groove line 323, it may be possible to improve the location fixing or coupling strength.

When the cell case 200 is installed in a way of seating on the groove line 323 of the heatsink 321, the first coupling portion 211A and the second coupling portion 211B described through FIG. 11 are preferably disposed at a location corresponding to the height of the guiding portion 324 between the groove lines 323.

The battery pack 1000 according to the present disclosure may further include a battery management system (BMS) (not shown). The battery management system may be mounted in the internal space of the pack housing 300, and configured to control the charge and discharge of the battery cells 110 or data transmission and reception.

Additionally, the battery pack 1000 according to the present disclosure may further include a Battery Disconnect Unit (BDU). The battery disconnect unit may be configured to control the electrical connection of the battery cells to manage the power capacity and function of the battery pack 1000. To this end, the battery disconnect unit may include a power relay, a current sensor, a fuse and so on. The battery disconnect unit is also provided for each pack, not for each module, and may include a variety of disconnect units known at the time of filing the application.

Besides, the battery pack 1000 according to the present disclosure may further include a variety of components of the battery pack known at the time of filing the application. For example, the battery pack 1000 may further include a Manual Service Disconnector (MSD) to separate a service plug by manual work to shut off power.

A vehicle (not shown) according to the present disclosure may include the above-described battery pack 1000 according to the present disclosure. Here, the vehicle (not shown) according to the present disclosure may be, for example, a predetermined vehicle (not shown) using electricity as a source of power such as an electric vehicle or a hybrid electric vehicle. In addition to the battery pack 1000 according to the present disclosure, the vehicle according to the present disclosure may further include any other components included in the vehicle, for example, a vehicle body, a motor and so on.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims.

The accompanying drawings illustrating the description of the present disclosure and its embodiment may be exaggerated to emphasize the technical aspect of the present disclosure, but obviously, it should be interpreted that various modifications and changes may be made at the ordinary level in the technical field pertaining to the present disclosure in view of the foregoing description and the illustrations in the drawings.

Additionally, in the description of the present disclosure, the terms such as first, second, upper, lower or vertical are terminology of instrumental concept used to relatively distinguish each component (element), and it is obvious that they are not used to a specific sequence or order of priority, or physically distinguish each component (element) according to the absolute standard.

### [Reference Signs List]

| | | | |
|---|---|---|---|
| 1000: | Battery pack | | |
| 100: | Cell assembly | 110: | Battery cell |
| 120: | Electrode portion | | |
| 200: | Cell case | 210: | Cover |
| 210-1: | First cover | 210-2: | Second cover |
| 211A: | First coupling portion | 211B: | Second coupling portion |
| 220: | Open portion | 230: | Insulation block |
| 231: | Body portion | 232: | Slot portion |
| 233: | Stopper structure (flange) | | |
| 300: | Pack housing | 310: | Top frame |
| 320: | Bottom frame | 330: | Front frame |
| 340: | Rear frame | 350: | Left frame |
| 360: | Right frame | 370: | Venting frame |
| 317: | Entry hole | 372: | Blocking member |
| 375: | Venting rib | VC: | Venting channel |
| P: | Thermal barrier member | | |

## Claims

1. A battery pack (1000), comprising:
a cell assembly (100) including at least one battery cell (110);
a cell case (200) accommodating the cell assembly (100); and
a pack housing (300) having an internal space in which the at least one cell case (200) is received,
**characterized in that** the cell case (200) includes:
a cover (210) made of a metal accommodating the cell assembly (100);
an open portion (220) present in the cover (210), through which an electrode portion (120) of the cell assembly (100) is exposed; and
an insulation block (230) which is disposed in the open portion (220) and configured to insulate the electrode portion (120) from the cover (210),
wherein the insulation block (230) includes:
a body portion (231); and
a slot portion (232) present in the body portion (231) and configured to provide a space through which the electrode portion (120) passes,
wherein the pack housing (300) further includes a venting frame (370) having an entry hole (371) at a location corresponding to the insulation block (230), and
wherein the insulation block (230) is configured to move to the entry hole (371) when a thermal event occurs in the cell assembly (100).

2. The battery pack (1000) according to claim 1, wherein the slot portion (232) is configured such that an outer space facing the entry hole (371) is smaller than an inner space opposite the outer space.

3. The battery pack (1000) according to claim 1, wherein the venting frame (370) further includes a blocking member (372) which is disposed in the entry hole (371) and configured to move away from the entry hole (371) in part or in whole with the movement of the insulation block (230) to open the entry hole (371).

4. The battery pack (1000) according to claim 1, wherein a horizontal length of the body portion (231) is longer than a first distance between the venting frame (370) and the cell case (200) to prevent one end of the body portion (231) from slipping out of the open portion (220), when the other end of the body portion (231) is inserted into the entry hole (371) by the thermal event.

5. The battery pack (1000) according to claim 4, wherein the insulation block (230) further includes a stopper structure (233) at the other end of the body portion (231) to prevent the body portion (231) from slipping out of the open portion (220).

6. The battery pack (1000) according to claim 1, wherein the body portion (231) of the insulation block (230) has an extendable length toward the entry hole (371).

7. The battery pack (1000) according to claim 1, wherein the venting frame (370) includes a venting channel (VC) inside to extend or change a path of the venting gas.

8. The battery pack (1000) according to claim 1, wherein the cover (210) of the cell case (200) further includes:
a first coupling portion (211A) disposed on one side, and having a first coupling structure; and
a second coupling portion (211B) disposed on the other side, and having a coupling structure corresponding to the first coupling structure so that the second coupling portion (211B) is coupled to a first coupling portion (211A) of a cover (210) of an adjacent other cell case (200).

9. A vehicle comprising the battery pack (1000) according to any one of claims 1 to 8.

## Patentansprüche

1. Batteriepack (1000), umfassend:
eine Zellenanordnung (100) einschließlich mindestens einer Batteriezelle (110);
ein Zellengehäuse (200), das die Zellenanordnung (100) aufnimmt; und
ein Packgehäuse (300) mit einem inneren Raum, in dem das mindestens eine Zellengehäuse (200) aufgenommen ist,
**dadurch gekennzeichnet, dass** das Zellengehäuse (200) Folgendes einschließt:
eine Abdeckung (210) aus einem Metall, die die Zellenanordnung (100) aufnimmt;
einen offenen Abschnitt (220), der in der Abdeckung (210) vorhanden ist, durch den ein Elektrodenabschnitt (120) der Zellenanordnung (100) freigelegt ist; und
einen Isolierblock (230), der in dem offenen Abschnitt (220) angeordnet und konfiguriert ist, um den Elektrodenabschnitt (120) von der Abdeckung (210) zu isolieren,
wobei der Isolierblock (230) Folgendes einschließt:
einen Körperabschnitt (231); und
einen Schlitzabschnitt (232), der in dem Körperabschnitt (231) vorhanden und konfiguriert ist, um einen Raum bereitzustellen, durch den der Elektrodenabschnitt (120) hindurchgeht,
wobei das Packgehäuse (300) ferner einen Entlüftungsrahmen (370) mit einer Eintrittsöffnung (371) an einer Stelle einschließt, die dem Isolierblock (230) entspricht, und
wobei der Isolierblock (230) konfiguriert ist, um sich zur Eintrittsöffnung (371) zu bewegen, wenn ein thermisches Ereignis in der Zellenanordnung (100) auftritt.

2. Batteriepack (1000) nach Anspruch 1, wobei der Schlitzabschnitt (232) so konfiguriert ist, dass ein der Eintrittsöffnung (371) zugewandter Außenraum kleiner ist als ein diesem Außenraum gegenüberliegender Innenraum.

3. Batteriepack (1000) nach Anspruch 1, wobei der Entlüftungsrahmen (370) ferner ein Blockierelement (372) einschließt, das in der Eintrittsöffnung (371) angeordnet und konfiguriert ist, um sich mit der Bewegung des Isolierblocks (230) teilweise oder vollständig von der Eintrittsöffnung (371) wegzubewegen, um die Eintrittsöffnung (371) zu öffnen.

4. Batteriepack (1000) nach Anspruch 1, wobei eine horizontale Länge des Körperabschnitts (231) länger ist als ein erster Abstand zwischen dem Entlüftungsrahmen (370) und dem Zellengehäuse (200), um zu verhindern, dass ein Ende des Körperabschnitts (231) aus dem offenen Abschnitt (220) herausrutscht, wenn das andere Ende des Körperabschnitts (231) durch das thermische Ereignis in die Eintrittsöffnung (371) eingeführt wird.

5. Batteriepack (1000) nach Anspruch 4, wobei der Isolierblock (230) ferner eine Stopperstruktur (233) am anderen Ende des Körperabschnitts (231) einschließt, um zu verhindern, dass der Körperabschnitt (231) aus dem offenen Abschnitt (220) herausrutscht.

6. Batteriepack (1000) nach Anspruch 1, wobei der Körperabschnitt (231) des Isolierblocks (230) eine ausziehbare Länge in Richtung der Eintrittsöffnung (371) aufweist.

7. Batteriepack (1000) nach Anspruch 1, wobei der Entlüftungsrahmen (370) im Inneren einen Entlüftungskanal (VC) aufweist, um einen Weg des Entlüftungsgases zu verlängern oder zu ändern.

8. Batteriepack (1000) nach Anspruch 1, wobei die Abdeckung (210) des Zellengehäuses (200) ferner Folgendes einschließt:
einen ersten Kupplungsabschnitt (211A), der auf einer Seite angeordnet ist und eine erste Kupplungsstruktur aufweist; und
einen zweiten Kupplungsabschnitt (211B), der auf der anderen Seite angeordnet ist und eine Kupplungsstruktur aufweist, die der ersten Kupplungsstruktur entspricht, sodass der zweite Kupplungsabschnitt (211B) mit einem ersten Kupplungsabschnitt (211A) einer Abdeckung (210) eines benachbarten anderen Zellengehäuses (200) gekoppelt ist.

9. Fahrzeug, umfassend den Batteriepack (1000) nach einem der Ansprüche 1 bis 8.

## Revendications

1. Bloc-batterie (1000), comprenant :
un ensemble de cellules (100) incluant au moins une cellule de batterie (110) ;
un boîtier de cellule (200) logeant l'ensemble de cellules (100) ; et
un boîtier de bloc (300) ayant un espace interne dans lequel le au moins un boîtier de cellule (200) est reçu,
**caractérisé en ce que** le boîtier de cellule (200) inclut :
un couvercle (210) fait d'un métal logeant l'ensemble de cellules (100) ;
une partie ouverte (220) présente dans le couvercle (210), à travers laquelle une partie électrode (120) de l'ensemble de cellules (100) est exposée ; et
un bloc d'isolation (230) qui est disposé dans la partie ouverte (220) et configuré pour isoler la partie électrode (120) du couvercle (210),
dans lequel le bloc d'isolation (230) inclut :
une partie corps (231) ; et
une partie fente (232) présente dans la partie corps (231) et configurée pour fournir un espace à travers lequel la partie électrode (120) passe,
dans lequel le boîtier de bloc (300) inclut en outre un cadre d'évent (370) ayant un trou d'entrée (371) à un emplacement correspondant au bloc d'isolation (230), et
dans lequel le bloc d'isolation (230) est configuré pour se déplacer vers le trou d'entrée (371) lorsqu'un événement thermique se produit dans l'ensemble de cellules (100).

2. Bloc-batterie (1000) selon la revendication 1, dans lequel la partie fente (232) est configurée de telle sorte qu'un espace extérieur faisant face au trou d'entrée (371) est plus petit qu'un espace intérieur opposé à l'espace extérieur.

3. Bloc-batterie (1000) selon la revendication 1, dans lequel le cadre d'évent (370) inclut en outre un élément de blocage (372) qui est disposé dans le trou d'entrée (371) et configuré pour s'éloigner du trou d'entrée (371) en partie ou en totalité avec le mouvement du bloc d'isolation (230) pour ouvrir le trou d'entrée (371).

4. Bloc-batterie (1000) selon la revendication 1, dans lequel une longueur horizontale de la partie corps (231) est plus longue qu'une première distance entre le cadre d'évent (370) et le boîtier de cellule (200) pour empêcher une extrémité de la partie corps (231) de glisser hors de la partie ouverte (220), lorsque l'autre extrémité de la partie corps (231) est insérée dans le trou d'entrée (371) par l'événement thermique.

5. Bloc-batterie (1000) selon la revendication 4, dans lequel le bloc d'isolation (230) inclut en outre une structure d'arrêt (233) à l'autre extrémité de la partie corps (231) pour empêcher la partie corps (231) de glisser hors de la partie ouverte (220).

6. Bloc-batterie (1000) selon la revendication 1, dans lequel la partie corps (231) du bloc d'isolation (230) a une longueur extensible vers le trou d'entrée (371).

7. Bloc-batterie (1000) selon la revendication 1, dans lequel le cadre d'évent (370) inclut un canal d'évent (VC) à l'intérieur pour étendre ou changer un trajet du gaz d'évent.

8. Bloc-batterie (1000) selon la revendication 1, dans lequel le couvercle (210) du boîtier de cellule (200) inclut en outre :
une première partie de couplage (211A) disposée sur un côté, et ayant une première structure de couplage ; et
une deuxième partie de couplage (211B) disposée sur l'autre côté, et ayant une structure de couplage correspondant à la première structure de couplage de sorte que la deuxième partie de couplage (211B) est couplée à une première partie de couplage (211A) d'un couvercle (210) d'un autre boîtier de cellule (200) adjacent.

9. Véhicule comprenant le bloc-batterie (1000) selon l'une quelconque des revendications 1 à 8.
